# EUROPEAN PATENT SPECIFICATION

(11) **EP 1 983 712 B1**
(45) Date of publication and mention of the grant of the patent: **09.06.2010**
(21) Application number: 06828346.4
(22) Date of filing: 15.12.2006
(51) Int. Cl.: H04L 29/06

(54) **AN AUTOMATIC DISCOVERING METHOD AND DEVICE FOR CLIENT LAYER LINK**
AUTOMATISCHES ENTDECKUNGSVERFAHREN UND EINRICHTUNG FÜR DIE CLIENT-SCHICHT-STRECKE
PROCEDE ET DISPOSITIF DE DECOUVERTE AUTOMATIQUE POUR LIAISON DE COUCHE CLIENT

(30) Priority: 14.01.2006 CN 200610032996
(43) Date of publication of application: 22.10.2008
(73) Proprietor: Huawei Technologies Co., Ltd., Shenzhen, Guangdong Province 518129 (CN)
(72) Inventor: XU, Yongliang, Shenzhen, Guangdong 518129 (CN)
(74) Representative: Hengelhaupt, Jürgen
(86) International application number: PCT/CN2006/003432
(87) International publication number: WO 2007/079649

(56) References cited:
- CN-A- 1 357 999
- CN-A- 1 503 532
- CN-A- 1 547 337
- CN-A- 1 661 984
- US-A1- 2005 089 327
- BERNSTEIN CIENA E MANNIE EBONE V SHARMA METANOIA G: "Framework for GMPLS-based Control of SDH/SONET Networks; draft-bms-optical-sdhsonet-mpls-control-fr mwrk-01.txt" IETF STANDARD-WORKING-DRAFT, INTERNET ENGINEERING TASK FORCE, IETF, CH, no. 1, 1 July 2001 (2001-07-01), XP015010986 ISSN: 0000-0004
- MANNIE CONSULTANT D PAPADIMITRIOU ALCATEL E: "Generalized Multi-Protocol Label Switching (GMPLS) Extensions for Synchronous Optical Network (SONET) and Synchronous Digital Hierarchy (SDH) Control; draft-papadimitriou-ccamp-rfc3946bis-00.tx t" IETF STANDARD-WORKING-DRAFT, INTERNET ENGINEERING TASK FORCE, IETF, CH, 1 August 2005 (2005-08-01), XP015040257 ISSN: 0000-0004
- MANNIE E ET AL: "Generalized Multi-Protocol Label Switching (GMPLS) Architecture; rfc3945.txt" IETF STANDARD, INTERNET ENGINEERING TASK FORCE, IETF, CH, 1 October 2004 (2004-10-01), XP015009717 ISSN: 0000-0003
- LANG J ET AL: "Link Management Protocol (LMP); rfc4204.txt" IETF STANDARD, INTERNET ENGINEERING TASK FORCE, IETF, CH, 1 October 2005 (2005-10-01), XP015054885 ISSN: 0000-0003

## Description

The present invention claims priority to Chinese Patent Application No. 200610032996.X, filed on January 14, 2006 and entitled "method and apparatus for automatically discovering a client layer link".

### Field of the Invention

The present invention relates to the field of network communication, and more particularly, to a method and apparatus for automatically discovering a client layer link in a Synchronous Digital Hierarchy (SDH) optical transport network.

### Background of the Invention

In a conventional optical transport network, such as the Synchronous Digital Hierarchy (SDH) defined in International Telecommunication Union-Telecommunication Standardization Sector (ITU-T) Recommendation G.803, the Synchronous Optical Network (Sonet) specified in American National Standards Institute (ANSI) T1.105 and the Optical Transport Network (OTN) specified in Recommendation G.872, a network connection service is generally provided semi-automatically by manual configuration or based on network management system. Such a connection typically employs a fixed optical link connection mode which enables static bandwidth assignment and allocation, and is generally referred to as a Permanent Connection (PC). Such networks may be divided by function into a transport plane for supporting network services and a management plane for performing management functions. The ITU-T Recommendation G.8080 introduces a control plane into the transport networks. The control plane supports functions such as automatic discovery, resource distribution, connection provision and failure recovery, and performs parts of connection management related functions which are originally performed by the management plane.

The conventional SDH network is composed of three independent planes, i.e. a management plane, a control plane and a transport plane. The management plane performs maintenance functions for the transport plane, the control plane and the system as a whole. It also provides coordination and cooperation between all the planes, and can configure and manage an end-to-end connection. The control plane controls the establishment and release of a connection, monitors and maintains the connection, and recovers the connection in case of a failure. The transport plane provides bi-directional or unidirectional transmission of user information from one end to another. It can also provide transmission of some control and network management information. The transport plane is layered according to the ITU-T G.805 Recommendation. To implement the functions of the conventional SDH network, the transport plane generally provides various exchange capabilities.

The control plane of the SDH network provides functions including automatic discovery, resource distribution, connect establishment and failure recovery, etc. These functions are generally implemented using the Generalized Multi-Protocol Switching (GMPLS) technology of the Internet Engineering Task Force (IETF). GMPLS is a family of protocols including a link management protocol, a routing protocol and a signaling protocol.

The control plane discovers a connection relationship of a link between nodes generally using a Link Management Protocol (LMP). The LMP sends a local identification of the link to the opposite node by using an in-band data transmission mechanism for links in the transport plane, for example, by using the J0 byte of an SDH line. In this way, the identifications of the two nodes of the link may be bound and the neighbor connection relationship may be discovered. The LMP then obtains a connection type and the number of resources supported by the link through exchanging control messages based on the neighbor discovery. The link including the traffic engineering information is referred to as a Traffic Engineering (TE) link in GMPLS.

Local link state information of a node obtained through the automatic discovery is distributed to other nodes in the same control domain via a routing protocol such as the Open Shortest Path First-Traffic Engineering (OSPF-TE) protocol, so that each node in the network has the same information on all the nodes and links in the control domain of these nodes.

Thus, based on these TE link information, when the network management system or a user requires the network to establish a network connection service, the network ingress node of the connection can calculate a path to obtain a link sequence through which the connection needs to pass, and then request, via a signaling protocol such as the Resource Reservation Protocol-Traffic Engineering (RSVP-TE), the nodes on the path to assign resources and establish cross connections, so as to establish an end-to-end connection.

The transport plane is a layered network, and may be divided into multiple layers of networks by switching capability. In the SDH network, the switching capability is evaluated according to virtual container level. A virtual container is an information structure for supporting a transport plane connection. Different levels of virtual containers provide transmission for different payloads. In the SDH network, virtual containers are divided into high order paths such as virtual container Level 4 (VC-4) and virtual container Level 3 (VC-3), and low order paths such as virtual container Level 12 (VC-12) and virtual container Level 11 (VC-11). For an OTN network, the virtual containers may be divided into Optical Channels (CHh) in an optical layer and different rate levels of Optical Channel Data Units (ODUs) in a electric layer. The ODUs include ODU1, ODU2 and ODU3, etc.

Each layer of network includes multiple sub-networks with the same cross connection capability. The boundary of a sub-network includes multiple sub-network points (also referred to as labels in GMPS). A sub-network connection (also referred to as "cross connection") may be dynamically established between the sub-network points in the same sub-network via configuration. A static connection may be established between sub-network points in different sub-networks via link connections. Multiple link connections between two sub-networks generally transferred on the same path in the service layer constitute a link. All link connections on the same link may be interrupted in case of a network failure (e.g., in the case that the optical cable is cut off). If multiple links are carried over the same optical fiber, optical cable or pipe, one network failure may also result in the interruption of all these links. Such a failure related attribute is generally indicated by the "Shared Risk Link Group (SRLG)" attribute of a link. The SRLG is a set of multiple SRLG values which are generally presented with a 32-bit unsigned number. The SRLG values each indicate a separate network failure. If the SRLG of a link includes multiple SRLG values, it means that the link may be interrupted in case of any one of the corresponding network failures. Multiple segments of link connections may be connected in series via a sub-network connection so as to form a network connection for transferring a network user signal. Such a network connection is generally referred to as a connection in brief

Besides serving as a service layer to directly provide an end-to-end connection service to a user, a high order path may also be used in a low order path as a client layer link. Such a connection is referred to as a Forwarding Adjacency (FA). For example, a VC-4 connection may serve to carry a Plesiochronous Digital Hierarchy (PDH)'s E4 signal, and support bearing multiple adapted low order paths on a connection in the high order path layer, e.g., transferring adapted 63 VC-12 signals over a VC-4 connection.

In the prior art, when a client layer link is established, the discovery of this client layer link is generally implemented manually by configuration or by using client layer discovery via the LMP protocol. For example, for a VC-4 service layer path supporting a VC-12 client layer, the above two methods for discovering a client layer link in the prior art are described as follows.

In the case that manual configuration is employed, the method includes: configuring, on the two end nodes of the client layer link, information on their respective opposite nodes for the link by a network management system. Information on switching capability of the client layer link, such as the switching capability for supporting 63 VC-12s, may also be configured on the two end nodes of the link. The client layer link discovery in this method needs manual configuration, and thus it is difficult for this method to meet the requirements of the present network operation and maintenance and new service provision and expanding.

In the case that the LMP protocol is employed in client layer discovery, there is generally not such a communication link between the two ends of the client layer link that can go right through from one end of the client layer link to the other end of the client layer link in the control plane. An LMP session cannot be established automatically between the two end nodes of the link. The method for discovering a client layer link includes the steps as follows.

1) A network management system configures at the two end nodes the IP addresses of their respective opposite end nodes for communication in the control plane, so as to initiate a session.

2) In the case that the service layer is VC-4 in this embodiment, the LMP protocol sends information of a local port of a link to the opposite node of the link generally using the J1 byte in the VC-4 path overhead depending on an in-band messaging mechanism.

3) Upon receipt of the contents of the J1 byte, the opposite node sends information of its local port to the port sending the J1 byte (the local port in step 2) through the control plane.

In this way, each of the two end nodes of the client layer link has the information of its local end node and its opposite end node, thereby achieving the auto client layer link discovery.

Using the LMP protocol to implement the client layer discovery also needs to manually configure the IP address of the opposite end node for communication in the control plane. Moreover, when using the LMP protocol to implement the client layer discovery, FA generally lacks an in-band messaging mechanism for connection relationship discovery, or applying the in-band messaging mechanism may cause a system alarm and result in a link failure. In the case that a VC-4 connection is used to provide a link for a VC-12 layer, for example, there is still not a mechanism that does not influence the service completely. If the J1 byte of the VC-4 is used for auto discovery, a path trace byte mismatch alarm may be caused, and all connections through this link need to be interrupted compulsorily in this case, according to the requirements of the ITU-T recommendation.

In addition, the SRLG attribute of the link generally needs to be configured manually through the control plane.

It can be seen that the solutions in the prior art are inevitably time and labor consuming and error prone due to some information needs to be configured or specified manually.
US 2005/0089327 discloses an architecture and method for performing dynamic route discovery and variable time slot reservation provisioning within optical-switched networks. The method employs extensions to the RSVP-TE signaling protocol, which uses various messages to reserve network resources.
"Framework for GMPLS-based Control of SDH/SONET Networks" (IETF STANDARD-WORKING-DRAFT, INTERNET ENGINEERING TASK FORCE, IETF, CH, no. 1, 1 July 2001) discloses a suit of protocols that defines Multi-Protocol Label Switching (MPLS) is in the process of enhancement to generalize its applicability to the control of non-packet based switching, that is, optical switching.

### Summary of the Invention

To address the drawback in the prior art that the client layer link discovery needs the intervention of the control plane for after the establishment of FA, an embodiment of the present invention provides a method for automatically discovering a client layer link. The method includes:
receiving, by a first node, a first connection establishment request sent from an initiator of a connection (101);
adding, by the first node, a client layer Traffic Engineering, TE, link object of the first node to the first connection establishment request; and
sending, by the first node, a second connection establishment request containing the client layer TE link object of the first node hop by hop in a direction from the first node to a second node (102);
parsing, by the second node, the second connection establishing request to obtain the client layer TE link object of the first node, and to obtain a client layer TE link by selection (103); wherein the obtaining a client layer TE link by selection comprising:
   obtaining, by the second node, client layer adaptation methods supported by the first node according to the client layer TE link object of the first node;
   comparing the client layer adaptation methods supported by the first node with client layer adaptation methods supported by the second node;
   selecting a client layer adaptation method commonly supported by the two nodes as an adaptation method for the client layer TE link; and
   obtaining and storing information of the client layer TE link.
   An embodiment of the present invention also provides A system for automatically discovering a client layer link,comprising a first node and a second node;
   the first node is designed to receive a first connection establishment request sent from an initiator of a connection, add a client layer Traffic Engineering, TE, link object of the first node to the first connection establishment request, and send a second connection establishment request containing the client layer TE link object of the first node hop by hop in a direction from the first node to the second node; and
the second node is designed to receive the second connection establishment request containing the client layer TE link object of the first node, parsing the second connection establishment request to obtain the client layer TE link object of the first node, and obtain a client layer TE link according to the client layer TE link object of the first node; wherein the obtaining a client layer TE link by selection comprising:
   obtaining, by the second node, client layer adaptation methods supported by the first node according to the client layer TE link object of the first node;
   comparing the client layer adaptation methods supported by the first node with client layer adaptation methods supported by the second node;
   selecting a client layer adaptation method commonly supported by the two nodes as an adaptation method for the client layer TE link; and
   obtaining and storing information of the client layer TE link.

The present invention has advantages in that the establishment of FA and the corresponding client layer link discovery are incorporated to be implemented collectively by the signaling protocol system, thereby accelerating the whole signaling procedure, simplifying the configuration requirements of the control plane, and evading the FA's lack of an in-band messaging mechanism. Moreover, since the client layer link may be discovered automatically, the procedure of manually specifying the IP address of the opposite node for communication in the control plane may be avoided when performing the client layer discovery by applying the LMP protocol, thereby not only improving the efficiency, but also increasing the accuracy.

### Brief Description of the Drawings

Figure 1 is a structure diagram of network connection and client layer link discovery according to an embodiment of the present invention;

Figure 2 is a structure diagram of network connection and client layer link discovery according to another embodiment of the present invention; and

Figure 3 is a flow chart of a method for automatically discovering a client layer link according to an embodiment of the present invention.

### Detailed Description of the Embodiments

The embodiments of the present invention are now described in detail with reference to the accompanying drawings, which do not intend to limit the present invention.

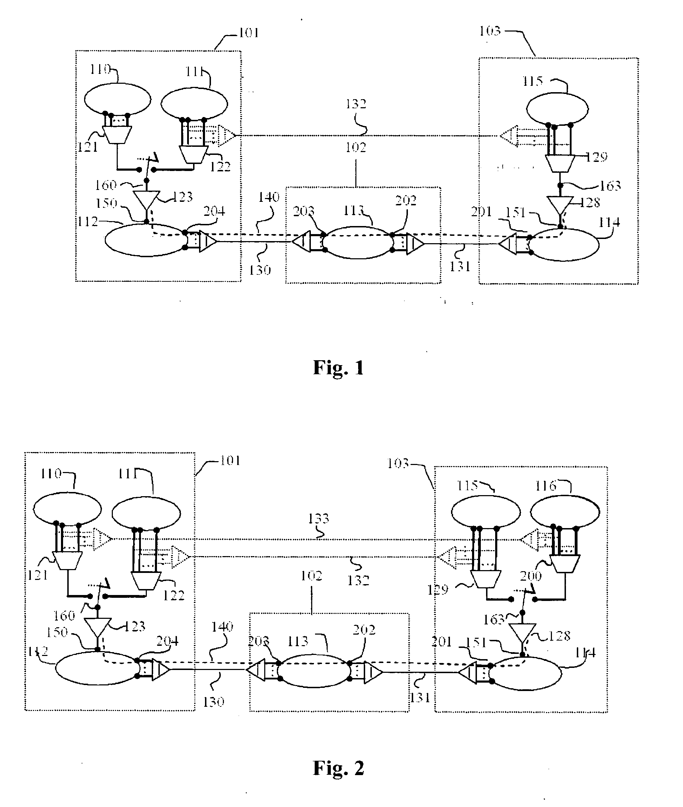

Referring to Figure 1, it shows a structure diagram of network connection and client layer link discovery according to an embodiment of the present invention. Three SDH nodes are shown in Figure 1, i.e. a node 101 (with a node ID as 10.0.0.1), a node 102 (with a node ID as 10.0.0.2) and a node 103 (with a node ID as 10.0.0.3). The node 101 includes three cross matrices with different cross connection capabilities, i.e. a VC-4 cross 112, a VC-12 cross 111 I and a VC-11 cross 110. An access point 150 for connecting the cross 112 via a terminator 123 may be connected to an adaptor 121 connecting the cross 110 or to an adaptor 122 connecting the cross 111. Such a variable adaptation may determine the adaptor actually to be connected through software configuration. The node 102 includes a cross matrix with a cross connection capability, i.e. a VC-4 cross 113. The node 103 includes two cross matrices with different cross connection capabilities, i.e. a VC-4 cross 114 and a VC-12 cross 115. An access point 151 for connecting the cross 114 via a terminator 128 is hard-connected to an adaptor 129 of the cross 115. The node 101 and the node 102 are connected via an optical link 130, and the node 102 and the node 103 are connected via an optical link 131. The optical link 130 has an SRLG attribute of {1, 2}, and the optical link 131 has an SRLG attribute of {3, 4}.

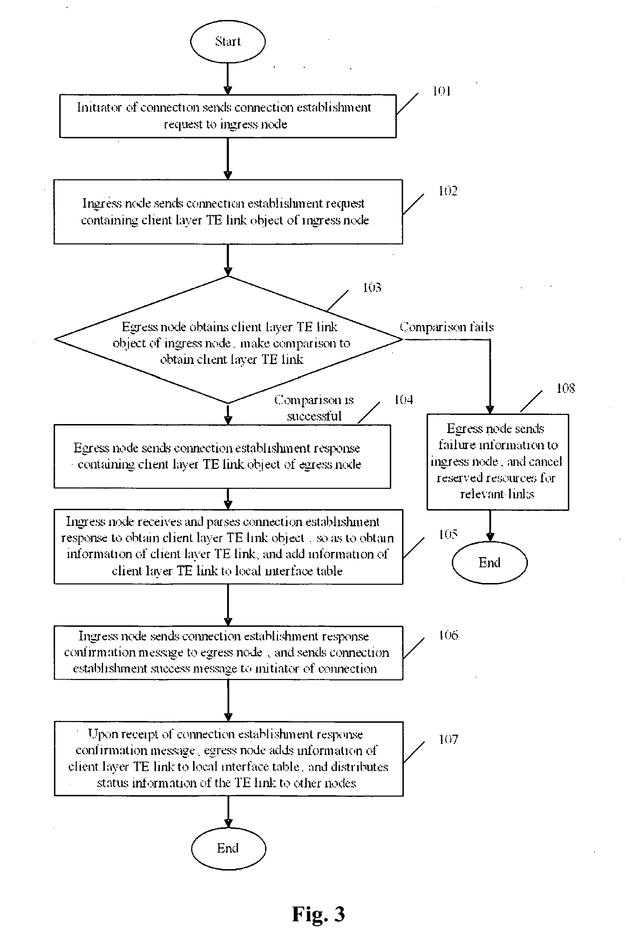

It is supposed that a network connection 140 is to be established between the access point 150 of the node 101 and the access point 151 of the node 103 in the VC-4 layer network, and this connection is to be used by the client layer to provide a link connection relationship. In the conventional GMPLS signaling protocol, a network connection is established via the RSVP-TE protocol (see IETF RFC 3473). Figure 3 shows a flow chart of a method for automatically discovering a client layer link according to an embodiment of the present invention. Referring to Figures 1 and 3, the method includes the steps as follows.

In block 101, a network management system or a user, i.e. the initiator of the connection sends a connection establishment request to an ingress node 101 of the network connection 140. The request includes the following contents: the start end of the connection is the access point 150 of the node 101, the terminate end of the connection is the access point 151 of the node 103, the type of the connection is VC-4, and the connection is a bi-directional connection. Besides the above information on the two ends of the connection, the network management system or the user may also specify information on all or parts of TE links through which the network connection passes, i.e. information on all or parts of source routes. If the request is sent by the network management system, it is coded based on a management protocol such as the Simple Network Management Protocol (SNMP). If the request is sent by the user, it may be a PATH message of the RSVP-TE protocol.

In block 102, the ingress node 101 of the connection parses the connection establishment request to obtain the information on the connection to be connected in the block 101. If there is no information on source routes or not information of all source routes is provided in the connection establishment request, the control plane needs to calculate a path for the connection according to the TE link information in a local Traffic Engineering Database (TED). In the embodiment, since there is no source route information, the control plane calculates a path and determines that the connection passes through the link 130 and the link 131 sequentially.

The ingress node 101 reserves resources on the link 130 for the connection, i.e. reserves a VC-4 bandwidth on the link, and then sends a connection establishment request to the next hop node 102 of the connection. In this embodiment, the RSVP-TE protocol is employed, and the corresponding connection establishment request is a PATH message. This connection establishment request also contains the link 130 being used by the local node 101 in the connection, and the source route information here indicating the link 131, besides the contents described in the block 101.

To achieve the automatic client layer link discovery during the establishment of FA, a client layer TE link object of the ingress node needs to be added to the request. In this embodiment, the client layer TE link object of the ingress node includes: a local identification of the link which is numbered (e.g., a separate IP address assigned to the link), or unnumbered (according to node ID: local link identification) in which unnumbered mode the local link identification is 160 and the local identification is 10.0.0.1:160 in this embodiment; a remote identification of the link which is unknown in this step and is set as 0.0.0.0:0; two exchange capabilities (corresponding to two adaption methods): in which one corresponds to a VC-12 client layer, and information of which includes that the switching capability of the link is VC-12 and the number of available paths is 63, and the other corresponds to a VC-11 client layer, and information of which includes that the switching capability of the link is VC-11 and the number of available paths is 84. The above client layer TE link object is coded in a way of one TE link object corresponding to multiple exchange capabilities.

Alternatively, another way in which two client layer TE link objects each support a client layer switching capability respectively may be employed for coding. In other words, there are two client layer TE links. One of the client layer TE links is a VC-12 client layer TE link object, information of which includes: a local link identification as 10.0.0.1:162, an switching capability of the link as VC-12, and the number of available paths as 63. The other of the client layer TE links is a VC-11 client layer TE link object, information of which includes: a link identification in the unnumbered mode as 10.0.0.1:161, an switching capability of the link as VC-11, and the number of available paths as 84. Optionally, the connection establishment request also includes an SRLG object. The SRLG object records the SRLG attributes of all the links through which the connection passes. The SRLG information of the current link (130) is added to the SRLG object, resulting in {1, 2}.

The transit node 102 receives the RSVP-TE based connection establishment request, i.e. the PATH message from the ingress node 101, parses the PATH message to determine that the connection enters the transit node 102 via the link 130 and goes to the termination end of the connection via the link 131. The transit node 102 reserves for the connection a VC-4 bandwidth on the link 131, indicates in the connect establishment request that the link 131 is used to connect the transit node 102 itself and no source route information is involved, adds the SRLG information of the current link (131) to the SRLG object of the connection, resulting in {1, 2, 3, 4}, other information being transmitted apparently, and forwards the connection establishment request to the egress node 103.

In block 103, the egress node 103 receives the RSVP-TE based connection establishment request, parses the request to determine that the connection enters the egress node 103 via the link 131 and the termination node of the connection is the access point 151 of the egress node 103, and to obtain the client layer TE link object of the ingress node 101. The egress node 103 assigns an output label 201 for the connection on the link 131, and establishes a bi-directional cross connection between the assigned output label 201 and the ingress node 151. The client layer TE link corresponding to the local access point 151 has an switching capability of VC-12. Compared with the two adaptation methods in the client layer TE link object of the ingress node 101, in this embodiment, VC-12 is common to the two client layer TE links. Consequently, a practical client layer TE link is resulted, which has a local port ID as 164, includes information of a TE link local ID as 10.0.0.3:163, a TE link opposite end ID as 10.0.0.1:160, an switching capability as VC-12, the number of available paths as 63, the direction of the link is bi-directional. The SRLG attribute of the client link may be obtained from the SRLG object of the connection as {1, 2, 3, 4} (which includes the SRLG information of the link 130 and the link 131 in this embodiment).

If a failure occurs in matching the adaptation methods by the egress node 103, the procedure proceeds to block 108. If the matching is successful, the procedure proceeds to block 104.

In block 104, the egress node 103 sends a connection establishment response to the node 102. The connection establishment response corresponds to an RSVP-TE RESV message, and includes the link 131 being passed currently, the output label 201 used by the connection and the client layer TE link (contents of which is described as above). At this time, the egress node 103 has obtained the client layer TE link, and thus the information of the client layer TE link may be stored on the egress node 103, for example, be stored into a local interface table of the egress node 103, and then be distributed to other nodes via a routing signaling. For the robustness of the system, the egress node distributes the information of the client layer TE link in block 107 in the embodiment.

The transit node 102 receives and parses the connection establishment response to obtain the current link 131 and an input label 202 of the link 131. It is noted that the node 102 obtains the output label 201 of the link 131 by parsing the connection establishment response, and consequently obtains the input label 202 according to a static connection relationship of the link 131, because the input label 202 and the output label 201 of the link 131 are connected via the link 131 statically. The node 102 assigns an output label 203 to the link 130 of the connection, for which link resources have been reserved, and establishes a bi-directional cross connection between the input label 202 of the link 131 and the output label 203 of the link 130. The node 102 sends a connection establishment response to the ingress node 101. The connection establishment response corresponds to an RSVP-TE RESV message, and includes the link 130 being passed currently, the output label 203 assigned to the connection. Other information is transmitted apparently.

In block 105, the ingress node 101 receives and parses the connection establishment response to obtain the current link 130, an input label 204 of the link 130 and the client layer TE link, and establishes a bi-link cross connection between the input label 204 of the current link 130 and the access point 150. The node 101 obtains the link information of the client layer TE link corresponding to the connection from the client layer TE link, instructs a resource manager to add the client layer TE link to a local interface table of the node 101, and distributes the client layer TE link to other nodes via a routing protocol (e.g., OSPF-TE).

In block 106, the ingress node 101 sends a connection establishment response confirmation message which corresponds to an RSVP-TE RESV_CONF message. The node 101 sends a connection establishment success message to the initiator of the connection (the network management system or the user).

In block 107, the egress node 103 receives the connection establishment response confirmation message, and instructs a Link Resource Manager (LRM) to add the information of the client layer TE link to its local interface table, and instructs a routing protocol to distribute the information to other nodes.

In block 108, the egress node 103 returns a failure message (corresponding to a PathErr message), and cancels the resource reservation for related links. This process is further described later.

To further describe the above embodiment, the RSVP-TE protocol supporting GMPLS extensions is described below in detail.

Contents of the connection establishment request RSVP-TE PATH message and the connection establishment response RSVP-TE RESV message are described as below. In the contents, the object in "[ ]" is optional, and object with "..." is repeatable. A unit of the information carried by RSVP-TE protocol is "Object", and each object can include multiple sub-objects.

In an embodiment of the present invention, a new client TE link object <CLIENT_TE_LINK> and a new SRLG object <SRLG> are introduced. Accordingly, an object for path information (Path message) is also introduced. Definitions of the newly introduced objects in the embodiment of the present invention are described as below, and the definitions of other objects may be found in IETF RFC 3473 and RFC 3209.

The newly introduced object corresponding to path information (Path message) is described as below. The contents following the ";" are the name of the object in Chinese.

```
<Path Message> ::= <Common Header> [<INTEGRITY>] ; <Path message> includes
 ; <Common Header > <Integrity>, and message following the "[]" is optional, which applies
 ; to the following description.
                [[<MESSAGE_ID_ACK>| <MESSAGE_ID_NACKL>]...]
                                          ;<Acknowledgement message identification>
                                          ;< Negative acknowledgement message
                                          ; identification>
               <MESSAGE_ID> ; <Message identification>
               <SESSION> <IF_ID_RSVP_HOP> ; <Session identification> <Next hop
                                                  ; interface identification>
               <TIME_VALUES> ; <Time identification>
                <GENERALIZED_LABEL_REQUEST> [<LABEL_SET>...]
                                              ; <Generalized label request> <Label set>
                [<ADMIN_STATUS>] ; <Administration status>
                [<POLICY_DATA>] ; <Policy data>
               [<CLIENT_TE_LINK>...][<SRLG>] ; <Client layer traffic
                                             ; engineeringlink > <Shared risk link group>
                <sender descriptor> ; <Sender descriptor> , the structure of which is
                                  ; described as below
 <sender descriptor> ::= <SENDER_TEMPLATE> <SENDER_TSPEC>
                                      ; <sender template> <sender traffic specification>
                          [<ADSPEC>] ; <Other related information of the sender>
                          [<RECORD_ROUTE>] ; <Record route>
 <Resv Message> ::= <Common Header> ; <Resv message> includes <Common header>
                [<INTEGRITY>] ; <Integrity>
                [[<MESSAGE_ID ACK>|<MESSAGE_ID_NACK>]...]
                                          ; <Acknowledgement message identification>
                               ; <Negative acknowledgement message identification>
                <MESSAGE_ID> ; <Message identification>
                <SESSION> <IF_ID_RSVP_HOP> ; <Session identification> <Next hop
                                               ; interface identification>
                <TIME_VALUES> ; <Time value>
                [<RESV_CONFIRM>] ; <Reservation confirmation>
                [<ADMIN_STATUS>] ; <Administration status>
                [<POLICY_DATA>] ; <Policy data>
               <STYLE> ; <Reservation style>
                [<CLIENT_TE_LINK>...] [<SRLG>]
                                 ; <Client traffic engineer link> < Shared risk link group>
               <FF flow descriptor> ; <Fixed filter flow descriptor>
 <FF flow descriptor> ::=
         <FLOWSPEC> <FILTER_SPEC>; <Flow specification> <Filter specification>
         <GENERALIZED_LABEL> ; <Generalized label>
```

The newly introduced client TE link object <CLIENT_TE_LINK> and SRLG object <SRLG> are described as below.

```
 <CLIENT_TE_LINK> ::= <LINK_LOCAL_ID> <LINK_REMOTE_ID>
                       [[<interface switching capability descriptor>]...]
 <Interface Switching Capability Descriptor> ::=
                          <Interface Switching Capability>
                          <Encoding>
                          <Min LSP Bandwidth>
                         <Max LSP Bandwidth>
```

In the <CLIENT_TE_LINK> object,

1. <LINK_LOCAL_ID> indicates a local identification of a link, which may have be numbered, i.e. be encoded by IPv4 or IPv6 address (see RFC 3209), or may be unnumbered (see RFC 3477).

2. <LINK_REMOTE_ID> indicates an identification assigned to the link by the opposite end of the link, which is encoded in the same way as the local identification of the link. In the RSVP-TE Path message, the link remote identification is unknown and thus is set as an empty identification. A corresponding link remote identification is given in the Resv message.

3. <Encoding> indicates an encoding type of the link, which is SDH in this embodiment. The details of this parameter may be found in RFC 4202.

4. <Min LSP Bandwidth> indicates the minimum bandwidth assignable to the link. The minimum bandwidth assignable to the link 132 in this embodiment is VC-12. The details of this parameter may be found in RFC 4202.

5. <Max LSP Bandwidth> indicates the maximum bandwidth of the link. For example, the maximum bandwidth of a VC-4 service layer path is 155 Mbit/s, corresponding to 63 VC-12s, in this embodiment. The details of this parameter may be found in RFC 4202.

The SRLG object is defined as bellow.
<SRLG> ::= [<SRLG value>...]
The SRLG object is composed of one or more 32-bit encoded SRLG values, for the details see RFC 4203.

Referring to Figure 1 again, if in the block 101, the network management system or the user specifies this connection to support a certain or more client layer adaptation methods, for example, specifies this connection to support VC-12 adaptation, the connection establishment request message sent from the ingress node 101 to the next hop node 102 only includes a TE link object of VC-12 client layer. In other words, the connection establishment request message includes a local link identification as 10.0.0.1: 160, an switching capability of the link as VC-12, and the number of available paths as 63. Other steps are the same as those in Figure 3.

Referring to Figure 1 again, if in the block 101, the network management system or the user specifies this connection to support VC-11 adaptation, the connection establishment request message sent from the ingress node 101 to the next hop node 102 includes a TE link object of VC-11 client layer. In other words, the connection establishment request message includes a local link identification as 10.0.0.1: 160, an switching capability of the link as VC-11, and the number of available paths as 84. The ingress node 101 sends this message to the egress node. The egress node 103 receives and parses the message to obtain the TE link object of VC-11 client layer, and compares the client adaptation methods of the two ends of the connection. Because the client layer TE link object of the egress node 103 has the adaptation capability of VC12, there is no adaptation method commonly supported by the two ends, and thus the establishment of this connection fails. At this time, the procedure proceeds to block 108. In block 108, the egress node 103 returns a failure message (corresponding to PathErr message) and cancels resource reservation for related links.

The present invention provides another embodiment. Referring to Figure 2, a schematic structure diagram of network connection and client layer link discovery according to another embodiment of the present invention is shown. Three SDH nodes 101, 102 and 103 are shown in Figure 2. The configuration of the nodes 101 and 102 are the same as the embodiment shown in Figure 1. The node 103 includes three cross matrices with different cross connection capabilities, i.e. a VC-4 cross 114, a VC-12 cross 115 and a VC-11 cross 116. An access point 151 for connecting the cross 114 via a terminator 128 may be connected to an adaptor 129 connecting the cross 115 or to an adaptor 200 connecting the cross 116. Such a variable adaptation may determine the adaptor actually to be connected through software configuration. The node 101 and the node 102 are connected via an optical link 130, and the node 102 and the node 103 are connected via an optical link 131.

The ingress node 101 sends to the egress node a connection establishment request carrying a client layer TE link object of the ingress node. The sending process is the same as that described above, and will not be repeated here.

Upon receipt of the connection establishment request, the egress node 103 parses the request to obtain the client layer link object of the ingress node 101, and compares the client layer link object of the ingress node 101 with a client layer TE link object of the egress node 103 itself to obtain a client layer TE link. Information of this client layer TE link includes: a local identification of the link as 10.0.0.1:162, a remote identification of the link as 10.0.0.1:160, two exchange capabilities of the link as VC-12 with the number of available paths of 63 and VC-11 with the number of available paths of 84. In this way, one of the exchange capabilities may be chosen upon the establishment of a client layer network.

There may also be two links, that is, the links 132 and 133 in Figure 2 are stored into the local interface tables of the egress node and the ingress node. Each of the client layer TE links has its local TE link ID, a TE link ID of its opposite end, the switching capability, the number of path resources and a bi-directional direction. In this embodiment, information of one client layer TE link includes a local ID of the TE link as 10.0.0.3:163, a remote ID of the TE link as 10.0.0.1:162, an switching capability as VC-12, the number of available path resources as 63 and a bi-directional direction. Information of the other client layer TE link includes a local ID of the TE link as 10.0.0.3:164, a remote ID of the TE link as 10.0.0.1:161, an switching capability as VC-11, the number of available path resources as 84 and a bi-directional direction. The information of these two client layer TE links is distributed to other nodes via a routing protocol.

For the embodiment as shown in Figure 2, when the switching capability of the client layer TE link object of the ingress node 101 and that of the client layer TE link object of the egress node 103 both are VC12, if only one link is stored into the local node and distributed to other nodes, the two client layer TE link objects cannot be distinguished by their exchange capabilities and only by manually designating the IDs on the two ends of the link. In such a case, it is appropriate that two client layer TE links are stored into the local interface table and distributed to other nodes. The two client layer TE links may be distinguished by the IDs of the two ends of the links.

It is noted that the "ingress" and "egress" for a node are just defined with respect to a certain "client layer link" establishment activity. One node may be an ingress node in one establishment activity while an egress node in another establishment activity. Due to this, an embodiment of the present invention provides an apparatus for automatically discovering a client layer link. This apparatus is arranged in a node of a network, and includes a request sending unit and a request receiving unit.

The request sending unit is designed to send a connection establishment request containing a client layer TE link object of an ingress node.

The request receiving unit is designed to receive the connection establishment request containing the client layer TE link object of the ingress node, and obtain a client layer TE link by selection.

The request receiving unit includes a receiving unit, a comparing unit and a storing unit. When the apparatus is arranged in an egress node,

the receiving unit is designed to receive the connection establishment request containing the client layer TE link object of the ingress node, and sends the connection establishment request to the comparing unit;

the comparing unit is designed to parse the connection establishment request to obtain a client layer adaptation method supported by the ingress node, compare the client layer adaptation method supported by the ingress node with a client layer adaptation method supported by the local node (the egress node here), select the adaptation method commonly supported by the two nodes as an adaptation method for the client layer TE link, so as to obtain the client layer TE link;

the storing unit is designed to store obtained information of the client layer TE link into the local node.

The request sending unit includes a comparing unit and a sending unit. When the apparatus is arranged in the ingress node,

the receiving unit is designed to receive the connection establishment request from an initiator of a connection, and send the connection establishment request to the comparing unit;

the comparing unit is designed to receive the connection establishment request from the initiator of the connection, obtain one or more specified client layer adaptation methods from the connection establishment request, compare the one or more specified client layer adaptation methods with a client layer adaptation method supported by the local node (the ingress node here), and select the client layer adaptation method commonly supported by the initiator and the ingress node to create the client layer TE link object of the ingress node, and send the client layer TE link object of the ingress node to the sending unit;

the sending unit is designed to send the connection establishment request containing the client layer TE link object of the ingress node.

The apparatus for automatically discovering a client layer link further includes a response sending unit and a response receiving unit.

The response sending unit is designed to send a connection establishment response containing a client layer TE link object corresponding to the selected client layer TE link.

The response receiving unit is designed to receive the connection establishment response, parse the connection establishment response to obtain the client layer TE link object.

The apparatus for automatically discovering a client layer link further includes a response confirmation message sending unit and a response confirmation message receiving unit.

The response confirmation message sending unit is designed to send a connection establishment response confirmation message, and send a connection establishment success message to the initiator of the connection.

The response confirmation message receiving unit is designed to receive the connection establishment response confirmation message.

By the apparatus and method for automatically discovering a client layer link according to the embodiments of the present invention, the automatic discovery of the client layer link may be implemented upon the establishment of the service layer network connection.

The preferred embodiments of the present invention have been described above. Various modifications and alternations to be made by those skilled in the art should be included within the protected scope of the present invention.

## Claims

1. A method for automatically discovering a client layer link, **characterized by** comprising:
receiving, by a first node, a first connection establishment request sent from an initiator of a connection (101);
adding, by the first node, a client layer Traffic Engineering, TE, link object of the first node to the first connection establishment request; and
sending, by the first node, a second connection establishment request containing the client layer TE link object of the first node hop by hop in a direction from the first node to a second node (102);
parsing, by the second node, the second connection establishing request to obtain the client layer TE link object of the first node, and to obtain a client layer TE link by selection (103); wherein the obtaining a client layer TE link by selection comprising:
obtaining, by the second node, client layer adaptation methods supported by the first node according to the client layer TE link object of the first node;
comparing the client layer adaptation methods supported by the first node with client layer adaptation methods supported by the second node;
selecting a client layer adaptation method commonly supported by the two nodes as an adaptation method for the client layer TE link; and
obtaining and storing information of the client layer TE link.

2. The method according to claim 1, wherein after the second node obtains the client layer TE link, the method further comprises:
sending, by the second node, a connection establishment response containing a client layer TE link object of the second node hop by hop in a direction from the second node to the first node (104).

3. The method according to claim 2, wherein the method further comprises:
receiving and parsing, by the first node, a connection establishment response containing a client layer TE link object of the second node to obtain the client layer TE link (105).

4. The method according to claim 3, wherein after the first node obtains the client layer TE link, the method further comprises:
storing, by the first node, information of the client layer TE link; and
sending, by the first node, a connection establishment response confirmation message to the second node and a connection establishment success message to the initiator of the connection (106).

5. The method according to claim 1, wherein
the first connection establishment request comprises: one or more specified client layer adaptation methods; and
wherein the method further comprises:
comparing, by the first node, the one or more specified client layer adaptation methods with a client layer adaptation method supported by the first node itself; and
selecting, by the first node, a client layer adaptation method commonly supported by the initiator and the first node to create the client layer TE link object of the first node.

6. The method according to claim 2, wherein the method further comprises:
receiving, by the second node, a connection establishment response confirmation message sent from the first node.

7. The method according to claim 1, wherein
if the client layer TE link supports at least two client layer adaptation methods, the link is distributed as one client layer TE link, and information of the client layer TE link contains at least two exchange capabilities (107); or
if the client layer TE link supports at least two client layer adaptation methods, the link is distributed as at least two client layer TE links, and each of the at least two client layer TE links has an switching capability.

8. The method according to claim 1, wherein the connection establishment request comprises a Shared Risk Link Group, SRLG, object; and wherein individual nodes on the network connection add SRLG information of links they are located on to the SRLG object so as to obtain SRLG information of the client layer TE link.

9. A system for automatically discovering a client layer link, **characterized by** comprising a first node and a second node;
the first node is designed to receive a first connection establishment request sent from an initiator of a connection, add a client layer Traffic Engineering, TE, link object of the first node to the first connection establishment request, and send a second connection establishment request containing the client layer TE link object of the first node hop by hop in a direction from the first node to the second node; and
the second node is designed to receive the second connection establishment request containing the client layer TE link object of the first node, parsing the second connection establishment request to obtain the client layer TE link object of the first node, and obtain a client layer TE link according to the client layer TE link object of the first node; wherein the obtaining a client layer TE link by selection comprising:
obtaining, by the second node, client layer adaptation methods supported by the first node according to the client layer TE link object of the first node;
comparing the client layer adaptation methods supported by the first node with client layer adaptation methods supported by the second node;
selecting a client layer adaptation method commonly supported by the two nodes as an adaptation method for the client layer TE link; and
obtaining and storing information of the client layer TE link.

## Patentansprüche

1. Verfahren zum automatischen Entdecken einer Strecke der Client-Schicht, **gekennzeichnet durch** die folgenden Schritte:
Empfangen einer von einem Initiator einer Verbindung gesendeten ersten Verbindungsherstellungsanforderung **durch** einen ersten Knoten (101);
Hinzufügen eines Streckenobjekts des Traffic Engineering TE der Client-Schicht des ersten Knotens zu der ersten Verbindungsherstellungsanforderung **durch** den ersten Knoten; und
Senden einer zweiten Verbindungsherstellungsanforderung, die das TE-Streckenobjekt der Client-Schicht des ersten Knotens enthält, **durch** den ersten Knoten Hop-weise in einer Richtung von dem ersten Knoten zu einem zweiten Knoten (102);
Parsen der zweiten Verbindungsherstellungsanforderung **durch** den zweiten Knoten, um das TE-Streckenobjekt der Client-Schicht des ersten Knotens zu erhalten und um durch Auswahl eine TE-Strecke der Client-Schicht zu erhalten (103); wobei das Erhalten einer TE-Strecke der Client-Schicht **durch** Auswahl Folgendes umfasst:
Erhalten von Anpassungsmethoden der Client-Schicht, die gemäß dem TE-Streckenobjekt der Client-Schicht des ersten Knotens **durch** den ersten Knoten unterstützt werden, **durch** den zweiten Knoten;
Vergleichen der **durch** den ersten Knoten unterstützten Anpassungsmethoden der Client-Schicht mit **durch** den zweiten Knoten unterstützten Anpassungsmethoden der Client-Schicht;
Auswählen einer gemeinsam **durch** die beiden Knoten unterstützten Anpassungsmethode der Client-Schicht als eine Anpassungsmethode für die TE-Strecke der Client-Schicht; und
Erhalten und Speichern von Informationen der TE-Strecke der Client-Schicht.

2. Verfahren nach Anspruch 1, wobei, nachdem der zweite Knoten die TE-Strecke der Client-Schicht erhält, das Verfahren ferner Folgendes umfasst:
Senden einer Verbindungsherstellungsantwort, die ein TE-Streckenobjekt der Client-Schicht des zweiten Knotens enthält, durch den zweiten Knoten Hop-weise in einer Richtung von dem zweiten Knoten zu dem ersten Knoten (104).

3. Verfahren nach Anspruch 2, wobei das Verfahren ferner Folgendes umfasst:
Empfangen und Parsen einer Verbindungsherstellungsantwort, die ein TE-Streckenobjekt der Client-Schicht des zweiten Knotens enthält, durch den ersten Knoten, um die TE-Strecke der Client-Schicht zu erhalten (105).

4. Verfahren nach Anspruch 3, wobei, nachdem der erste Knoten die TE-Strecke der Client-Schicht erhält, das Verfahren ferner Folgendes umfasst:
Speichern von Informationen der TE-Strecke der Client-Schicht durch den ersten Knoten; und
Senden einer Verbindungsherstellungsantwort-Bestätigungsnachricht zu dem zweiten Knoten und einer Verbindungsherstellungs-Erfolgsnachricht zu dem Initiator der Verbindung durch den ersten Knoten (106).

5. Verfahren nach Anspruch 1, wobei
die erste Verbindungsherstellungsanforderung Folgendes umfasst:
ein oder mehrere spezifizierte Anpassungsverfahren der Client-Schicht; und
wobei das Verfahren ferner Folgendes umfasst:
Vergleichen des einen oder der mehreren spezifizierten Anpassungsverfahren der Client-Schicht durch den ersten Knoten mit einem durch den ersten Knoten selbst unterstützten Anpassungsverfahren der Client-Schicht; und
Auswählen eines gemeinsam durch den Initiator und den ersten Knoten unterstützten Anpassungsverfahrens der Client-Schicht durch den ersten Knoten, um das TE-Streckenobjekt der Client-Schicht des ersten Knotens zu erzeugen.

6. Verfahren nach Anspruch 2, wobei das Verfahren ferner Folgendes umfasst:
Empfangen einer von dem ersten Knoten gesendeten Verbindungsherstellungsantwort-Bestätigungsnachricht durch den zweiten Knoten.

7. Verfahren nach Anspruch 1, wobei
wenn die TE-Strecke der Client-Schicht mindestens zwei Anpassungsverfahren der Client-Schicht unterstützt, die Strecke als eine TE-Strecke der Client-Schicht verteilt wird und Informationen der TE-Strecke der Client-Schicht mindestens zwei Switching-Fähigkeiten enthalten (107); oder
wenn die TE-Strecke der Client-Schicht mindestens zwei Anpassungsverfahren der Client-Schicht unterstützt, die Strecke als mindestens zwei TE-Strecken der Client-Schicht verteilt wird und jede der mindestens zwei TE-Strecken der Client-Schicht eine Switching-Fähigkeit aufweist.

8. Verfahren nach Anspruch 1, wobei die Verbindungsherstellungsanforderung ein Objekt der Shared Risk Link Group SRLG umfasst; und wobei individuelle Knoten auf der Netzwerkverbindung SRLG-Informationen von Strecken, auf denen sie sich befinden, zu dem SRLG-Objekt hinzufügen, um so SRLG-Informationen der TE-Strecke der Client-Schicht zu erhalten.

9. System zum automatischen Entdecken einer Strecke der Client-Schicht, **dadurch gekennzeichnet, dass** es einen ersten Knoten und einen zweiten Knoten umfasst;
wobei der erste Knoten dafür ausgelegt ist, eine von einem Initiator einer Verbindung gesendete erste Verbindungherstellungssanforderung zu empfangen, ein Streckenobjekt des Traffic Engineering TE der Client-Schicht des ersten Knotens zu der ersten Verbindungsherstellungsanforderung hinzuzufügen und eine zweite Verbindungsherstellungsanforderung, die das TE-Streckenobjekt der Client-Schicht des ersten Knotens enthält, Hop-weise in einer Richtung von dem ersten Knoten zu dem zweiten Knoten zu senden; und
der zweite Knoten dafür ausgelegt ist, die zweite Verbindungsherstellungsanforderung, die das TE-Streckenobjekt der Client-Schicht des ersten Knotens enthält, zu empfangen, die zweite Verbindungsherstellungsanforderung zu parsen, um das TE-Streckenobjekt der Client-Schicht des ersten Knotens zu erhalten und eine TE-Strecke der Client-Schicht gemäß dem TE-Streckenobjekt der Client-Schicht des ersten Knotens zu erhalten; wobei das Erhalten einer TE-Strecke der Client-Schicht durch Auswahl Folgendes umfasst:
Erhalten von Anpassungsmethoden der Client-Schicht, die gemäß dem TE-Streckenobjekt der Client-Schicht des ersten Knotens durch den ersten Knoten unterstützt werden, durch den zweiten Knoten;
Vergleichen der durch den ersten Knoten unterstützten Anpassungsmethoden der Client-Schicht mit durch den zweiten Knoten unterstützten Anpassungsmethoden der Client-Schicht;
Auswählen einer gemeinsam durch die beiden Knoten unterstützten Anpassungsmethode der Client-Schicht als eine Anpassungsmethode für die TE-Strecke der Client-Schicht; und
Erhalten und Speichern von Informationen der TE-Strecke der Client-Schicht.

## Revendications

1. Procédé de découverte automatique d'une liaison de couche client, **caractérisé en ce qu'**il comprend :
la réception, par un premier noeud, d'une première requête d'établissement de connexion envoyée par un demandeur de connexion (101) ;
l'ajout, par le premier noeud, d'un objet de liaison d'Ingénierie de Trafic, TE, de couche client du premier noeud à la première requête d'établissement de connexion ;
et
l'envoi, par le premier noeud, d'une seconde requête d'établissement de connexion contenant l'objet de liaison TE de couche client du premier noeud saut par saut dans un sens allant du premier noeud à un second noeud (102) ;
l'analyse syntaxique, par le second noeud, de la seconde requête d'établissement de connexion afin d'obtenir l'objet de liaison TE de couche client du premier noeud, et
d'obtenir une liaison TE de couche client par sélection (103) ; l'obtention d'une liaison TE de couche client par sélection comprenant :
l'obtention, par le second noeud, de procédés d'adaptation de couche client supportés par le premier noeud en fonction de l'objet de liaison TE de couche client du premier noeud ;
la comparaison des procédés d'adaptation de couche client supportés par le premier noeud aux procédés d'adaptation de couche client supportés par le second noeud ;
la sélection d'un procédé d'adaptation de couche client supporté communément par les deux noeuds comme procédé d'adaptation de la liaison TE de couche client ; et
l'obtention et la mémorisation des informations de la liaison TE de couche client.

2. Procédé selon la revendication 1, comprenant en outre, après l'obtention par le second noeud de la liaison TE de couche client :
l'envoi, par le second noeud, d'une réponse d'établissement de connexion contenant un objet de liaison TE de couche client du second noeud saut par saut dans un sens allant du second noeud au premier noeud (104).

3. Procédé selon la revendication 2, dans lequel le procédé comprend en outre :
la réception et l'analyse syntaxique, par le premier noeud, d'une réponse d'établissement de connexion contenant un objet de liaison TE de couche client du second noeud afin d'obtenir la liaison TE de couche client (105).

4. Procédé selon la revendication 3, comprenant en outre, après l'obtention par le premier noeud de la liaison TE de couche client :
la mémorisation, par le premier noeud, des informations de la liaison TE de couche client ; et
l'envoi, par le premier noeud, d'un message de confirmation de réponse d'établissement de connexion au second noeud et d'un message de réussite d'établissement de connexion au demandeur de la connexion (106).

5. Procédé selon la revendication 1, dans lequel
la première requête d'établissement de connexion comprend : un ou plusieurs procédés d'adaptation de couche client spécifiés ; et
le procédé comprenant en outre :
la comparaison, par le premier noeud, des un ou plusieurs procédés d'adaptation de couche client spécifiés à un procédé d'adaptation de couche client supporté par le premier noeud lui-même ; et
la sélection, par le premier noeud, d'un procédé d'adaptation de couche client supporté communément par le demandeur et le premier noeud afin de créer l'objet de liaison TE de couche client du premier noeud.

6. Procédé selon la revendication 2, comprenant en outre :
la réception, par le second noeud, d'un message de confirmation de réponse d'établissement de connexion envoyé depuis le premier noeud.

7. Procédé selon la revendication 1, dans lequel
si la liaison TE de couche client supporte au moins deux procédés d'adaptation de couche client, la liaison est distribuée en tant que liaison TE de couche client unique, et les informations de la liaison TE de couche client contiennent au moins deux capacités de commutation (107) ; ou
si la liaison TE de couche client supporte au moins deux procédés d'adaptation de couche client, la liaison est distribuée en tant qu'au moins deux liaisons TE de couche client, et chacune des au moins deux liaisons TE de couche client a une capacité de commutation.

8. Procédé selon la revendication 1, dans lequel la requête d'établissement de connexion comprend un objet de Groupe de Liaisons à Risque Partagé, SRLG, et dans lequel des noeuds individuels sur la connexion de réseau ajoutent des informations SRLG des liaisons sur lesquelles ils sont situés sur l'objet SRLG de façon à obtenir des informations SRLG de la liaison TE de couche client.

9. Système de découverte automatique d'une liaison de couche client, **caractérisé en ce qu'**il comprend un premier noeud et un second noeud ;
le premier noeud est conçu pour recevoir une première requête d'établissement de connexion envoyée par un demandeur d'une connexion, ajouter un objet de liaison d'Ingénierie de Trafic, TE, de couche client du premier noeud à la première requête d'établissement de connexion, et envoyer une seconde requête d'établissement de connexion contenant l'objet de liaison TE de couche client du premier noeud saut par saut dans un sens allant du premier noeud au second noeud; et
le second noeud est conçu pour recevoir la seconde requête d'établissement de connexion contenant l'objet de liaison TE de couche client du premier noeud, analysant syntaxiquement la seconde requête d'établissement de connexion afin d'obtenir l'objet de liaison TE de couche client du premier noeud, et obtenir une liaison TE de couche client en fonction de l'objet de liaison TE de couche client du premier noeud, l'obtention de la liaison TE de couche client par sélection comprenant
l'obtention, par le second noeud, de procédés d'adaptation de couche client supportés par le premier noeud en fonction de l'objet de liaison TE de couche client du premier noeud ;
la comparaison des procédés d'adaptation de couche client supportés par le premier noeud aux procédés d'adaptation de couche client supportés par le second noeud;
la sélection d'un procédé d'adaptation de couche client supporté communément par les deux noeuds comme procédé d'adaptation de la liaison TE de couche client ; et l'obtention et la mémorisation des informations de la liaison TE de couche client.
